(19) Europäisches Patentamt
European Patent Office
Office européen des brevets

(11) **EP 2 263 976 A1**

(12) **EUROPEAN PATENT APPLICATION**

(43) Date of publication:
**22.12.2010 Bulletin 2010/51**

(51) Int Cl.:
*C01F 7/00* (2006.01)

(21) Application number: **09161849.6**

(22) Date of filing: **03.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Akzo Nobel Chemicals International B.V.**
**3811 MH  Amersfoort (NL)**

(72) Inventors:
• **Talma, Auke Gerardus**
**7437 PM Bathmen (NL)**

• **Schomaker, Elwin**
**6828 EH Arnhem (NL)**
• **Bruijn, Simon**
**7411 GP Deventer (NL)**
• **Budhysutanto, Widya Nugraha**
**2628 DH Delft (NL)**

(74) Representative: **Schalkwijk, Pieter Cornelis**
**Akzo Nobel N.V.**
**Intellectual Property Department**
**P.O. Box 9300**
**6800 SB Arnhem (NL)**

(54) **Layered double hydroxide with a specific morphology, its preparation and use**

(57) Layered double hydroxide comprising platelets having an area A and a perimeter P, the value of $P/(2\pi\sqrt{(A/\pi)})$ being more than 1.15. The platelets of the layered double hydroxides are generally ring-shaped or sickle-shaped and can be prepared by (i) preparing a slurry comprising at least one oxide, hydroxide, or oxyhydroxide of a trivalent metal M(III) and at least one oxide, hydroxide, or oxyhydroxide of a divalent metal M(II) in a molar ratio M(II)/M(III) of 1.5 to 3, an average particle size (d50) in the range 1-4 microns, and where the value of $[M(II)/M(III)]^3 \cdot d50$ is in the range 16-36 $\mu$m, and (ii) thermally treating said slurry at a temperature in the range 75-120°C for a period of 1-24 hours.

EP 2 263 976 A1

**Description**

The present invention relates to a new layered double hydroxide, its preparation and use, said layered double hydroxide having a specific morphology.

Layered double hydroxides - also called anionic clays - have a crystal structure consisting of positively charged layers built up of specific combinations of metal hydroxides between which there are anions and water molecules. Hydrotalcite is an example of a naturally occurring anionic clay wherein carbonate is the predominant anion present. Meixnerite is an anionic clay wherein hydroxyl is the predominant anion present.

In layered double hydroxides brucite-like main layers are built up of octahedra alternating with interlayers containing water molecules and charge-balancing anions. These charge-balancing anions compensate for the electrostatic charge deficiencies of the crystalline clay sheets of the layered double hydroxide. Examples of anions are $NO_3^-$, $OH^-$, $Cl^-$, $Br^-$, $I^-$, $SO_4^{2-}$, $SiO_3^{2-}$, $CrO_4^{2-}$, $BO_3^{2-}$, $MnO_4^-$, $HGaO_3^{2-}$, $HVO_4^{2-}$, $ClO_4^-$, $BO_3^{2-}$, pillaring anions such as $V_{10}O_{28}^{-6}$ and $Mo_7O_{24}^{6-}$, monocarboxylates such as acetate, dicarboxylates such as oxalate, alkyl sulphonates such as lauryl sulphonate.

The general structure of a conventional layered double hydroxide is

$$[M(II)_m^{2+} M(III)_n^{3+} (OH)_{2m+2n}\cdot](X_{n/z}^{z-})\cdot bH_2O$$

wherein M(II) is a divalent metal, M(III) is a trivalent metal, $X^{z-}$ is the charge-balancing anion, b has a value of about 4, and m and n have a value such that m/n= 2 to 4, most preferably close to 3.

The preparation of anionic clays has been described in many publications. Two major reviews of anionic clay chemistry were published in which the methods available for anionic clay synthesis have been summarised:

F. Cavani et al. "Hydrotalcite-type anionic clays: Preparation, Properties and Applications," Catalysis Today, 11 (1991) Elsevier Science Publishers B.V. Amsterdam.
J P Besse and others "Anionic clays: trends in pillary chemistry," in M.I. Occelli, H.E. Robson, eds., Synthesis and Microporous Solids (1992), 2, 108, Van Nostrand Reinhold, N.Y.

In these reviews the authors state that a characteristic of Mg-Al anionic clays is that mild calcination at 500°C results in the formation of a disordered MgO-like product. Said disordered MgO-like product is distinguishable from spinel (which results upon severe calcination) and from anionic clays. This disordered MgO-like material is also referred to as Mg-Al solid solution. The formation of these solid solutions is reversible, which means that their exposure to water results in the re-formation of the anionic clay structure.

Two types of anionic clay preparation are described in these reviews. The most conventional method is co-precipitation of a soluble divalent metal salt and a soluble trivalent metal salt, optionally followed by hydrothermal treatment or aging to increase the crystallite size. The second method is the salt-oxide method in which a divalent metal oxide is reacted at atmospheric pressure with a soluble trivalent metal salt, followed by aging under atmospheric pressure. This method has only been described for the use of ZnO and CuO in combination with soluble trivalent metal salts.

Several patent applications relating to the production of anionic clays from inexpensive raw materials have been published. These materials include magnesium oxide and aluminium trihydrate. See, for example, WO 99/41198, WO 99/41196, WO 99/41195, WO 99/41197, WO 01/012550, WO 01/012543, and WO 02/064504.

When ideally, i.e. rhombohedrally, crystallized, conventional LDH platelets have a more or less hexagonal shape when viewed with scanning electron microscopy (SEM). When less ideally crystallized, they have a more or less circular shape.

The present invention relates to a layered double hydroxide (LDH) with a different morphology. That is: the layered double hydroxide platelets have significantly more outer surface (edges) available for reaction and intercalation than the known circular or hexagonal LDH platelets.

The advantage of having more outer surface available is that the active sites for catalysis or adsorption are more readily accessible and that intercalation becomes faster.

The LDH platelets according to the present invention can have different shapes, but generally are ring-shaped or sickle-shaped.

The edge content per surface area of the platelets is represented by the value of $P/(2\pi\sqrt{(A/\pi)})$, which is more than 1.15, preferably more than 1.25, and most preferably more than 1.35.

The value of $P/(2\pi\sqrt{(A/\pi)})$ can be determined using image analysis of scanning electron microscopy (SEM) photographs of the platelets, whereby the outer contours of the platelets, and the surface area A within these contours and the perimeter P of these contours can be calculated. In the case of a ring-shaped platelet, one should determine both the outer perimeter of the ring ($P_o$) and the inner one ($P_i$), so that $P=P_o+P_i$. The surface area A of such ring-shaped platelets equals the surface area within the outer and the inner contours of said rings.

The effective radius of the platelet, calculated from the determined surface area is:

$$R_s=\sqrt{(A/\pi)}$$

The effective radius of the platelet, calculated from the determined perimeter is:

$$R_p=(P)/(2\pi)$$

The ratio $R_{p/s}=R_p/R_s= P/(2\pi\sqrt{(A/\pi)})$ of the LDH platelets according to the present invention is more than 1.15, indicating a larger edge content than for perfectly round ($R_{p/s}=1$) or hexagonal ($R_{p/s}=1.0501$) platelets.

The mean stack thickness, as measured by XRD on dried samples, is preferably less than 50 nm, more preferably less than 40 nm, and most preferably less than 30 nm. This mean stack thickness can be determined using the 003-reflection, employing the well-known Scherrer technique as disclosed in "The Scherrer Formula for X-Ray Particle Size Determination," Phys. Rev. (American Physical Society) 56 (10) 978-982, November 1939.

As mentioned above, layered double hydroxides are built up of divalent and trivalent metals. Suitable trivalent metals for the LDH according to the present invention include aluminium, gallium, indium, iron, chromium, vanadium, cobalt, manganese, cerium, niobium, lanthanum, and combinations of one or more of these metals. The preferred trivalent metal is aluminium.

Suitable divalent metals include magnesium, zinc, nickel, copper, iron, cobalt, manganese, calcium, barium, and combinations of one or more of these metals. Preferred divalent metals are magnesium, zinc, and combinations thereof. The most preferred divalent metals are magnesium and zinc.

The LDH according the present invention can contain the various charge balancing anions listed above. Particularly preferred are $OH^-$, $CO_3^{2-}$, sulphate, phosphate, borate, and organic anions such as carboxylic acids, alkyl sulphonates, and alkyl phosphonates.

The layered double hydroxide according to the present invention can be prepared by a process comprising the steps of:

- preparing a slurry comprising at least one oxide, hydroxide, or oxyhydroxide of a trivalent metal M(III) and at least one oxide, hydroxide, or oxyhydroxide of a divalent metal M(II) in a molar ratio M(II)/M(III) of 1.5 to 3, an average particle size (d50) in the range 1-4 microns, and where the value of $[M(II)/M(III)]^{3*}d50$ is in the range 16-36 $\mu m$, and
- thermally treating said slurry at a temperature in the range 75-120°C for a period of 1-24 hours.

The slurry in this process can be an aqueous slurry or one based on organic solvents. Examples of suitable organic solvents are alcohols such as methanol, ethanol, 1-propanol, and isopropanol; alkoxylated alcohols such as propylene glycol monomethyl ether and propylene glycol monoethyl ether; alkanes such as pentane, hexane, and heptane; and aromatic hydrocarbons such as benzene, toluene, and xylene. Preferably, the suspending medium comprises water, an alcohol and/or an alkoxylated alcohol. Most preferably, the suspending medium is water.

As divalent and trivalent metal sources oxides, hydroxides, and oxyhydroxides of the above-mentioned di- and trivalent metals are used. These materials are relatively inexpensive and do not leave undesirable anions in the LDH which either have to be washed out or will be emitted as environmentally harmful gases upon heating.

Aluminium is the preferred trivalent metal. Examples of suitable aluminium sources include transition aluminas, aluminium trihydroxides (gibbsite, bayerite) and its thermally treated forms (including flash-calcined alumina), alumina sols, amorphous alumina, aluminium oxyhydroxides such as (pseudo)boehmite, diaspore, and goethite, BOC (Bauxite Ore Concentrate), and bauxite. The preferred aluminium source is aluminium trihydroxide, also called aluminium trihydrate, such as gibbsite, nordstrandite, and bayerite. Combinations of two or more of the above-mentioned aluminium sources may also be used. Magnesium and zinc are the preferred divalent metals. Examples of suitable magnesium sources are MgO, $Mg(OH)_2$, magnesium carbonate, and hydromagnesite. Preferred magnesium sources are MgO and $Mg(OH)_2$; the most preferred magnesium source is MgO. Combinations of two or more of the above-mentioned magnesium sources may also be used.

Suitable zinc sources are zinc oxide, zinc hydroxide, zinc carbonate, and zinc hydroxycarbonate. Combinations of two or more of the above-mentioned zinc sources may also be used. It is also contemplated to use a combination of at least one magnesium source and at least one zinc source.

The Mg/Al molar ratio in the slurry must be in the range 1.5 to 3.0, preferably 1.8 to 2.6, and most preferably 2 to 2.4.

The average particle size (d50) of the solids in the slurry - prior to thermal treatment - must be in the range 1-4 microns, preferably 1.5-3.5 microns, and most preferably 2-3 microns. This can be achieved by milling of the slurry or by preparing the slurry from particles with the right average size. Suitable instruments for milling the slurry are ball mills, bead mills, sand mills, colloid mills, and a high shear mixers. Devices employing ultrasound may also be used.

The d50 can be determined using a Malvern Mastersizer.

It was emperically found that $[M(II)/M(III)]^{3*}d50$ should be in the range of 6-36 $\mu$m, preferably 17-33 $\mu$m, and most preferably 20-30 $\mu$m, reflecting a strong influence of the M(II)/M(III) ratio on the morphology of the particles produced.

The slurry is treated at a temperature in the range 75-120°C, preferably 80-110°C, most preferably 85-105°C, for a period of time ranging from 1 to 24 hours, preferably 2 to 16 hours, most preferably 3 to 8 hours. The pressure may be atmospheric or, if the temperature is above the boiling point of the suspending medium, autogenous. It is possible, although less preferred, to apply a higher pressure using, e.g., nitrogen gas.

The combination of the above-mentioned Mg/Al molar ratio, d50, temperature, and treatment time is important for obtaining an LDH according to the present invention. If one of these parameters is outside the indicated range, an LDH according to the present invention is not obtained.

Further, the slurry can contain anions that may intercalate, i.e. become the charge-balancing anion between the LDH platelets. Without the addition of specific anions, an LDH with OH- charge-balancing anions will be formed. If carbonate charge-balancing ions are desired, ammonium carbonate can be added to the slurry.

Ammonium salts are a good way to also introduce other anions, such as sulphonates, organosulphonates, phosphates, and organophosphates.

The layered double hydroxide according to the present invention can be used for various applications. These include catalytic applications, such as the use as solid base catalyst in, e.g., aldol condensation, self condensation, Knoevenagel condensation, Claisen-Schmidt condensation, Michael addition, transesterification, alkylation, double bond isomerization, hydrogenation, amination, dehydrocyclodimerization, aldol addition, nitroaldol addition, conjugate addition of alcohols, cyanaethylation, Tishchenko reaction, nucleophilic ring opening of epoxides, oxidation reactions, Si-C bond formation, P-C bond formation (Pudovik reaction), and the synthesis of heterocycles.

Also contemplated is the use as FCC (fluid catalytic cracking) additive for SOx and NOx reduction, for sulphur reduction in gasoline and diesel and for hydroprocessing applications, including hydrodenitrification (HDN) and hydrodesulphurization (HDS) applications.

The layered double hydroxide according to the present invention can also be used as stabilizer in chlorine-containing (co)polymers such as PVC and PVDC, as halogen scavenger, as $CO_2$-scavenger as adsorbent in waste water treatment, as flame retardant or flame retardant synergist, as active component in medicaments such as anti-acids, as a filler in thermosetting resins, as adhesion promoter, in the paper and coatings industry, as anionic trash catcher or stain blocker, or as encapsulation material for sensitive (in)organic components.

If the anticipated use is PVC stabilization, the preferred intercalating anion is carbonate.

If desired, for instance to make the layered double hydroxide according to the invention more compatible with polymers like PVC or PVDC, it is possible to treat the layered double hydroxide with organic anions, such as rosin derivatives or fatty acids or salts thereof (such as sodium stearate), according to well-known procedures.

FIGURES

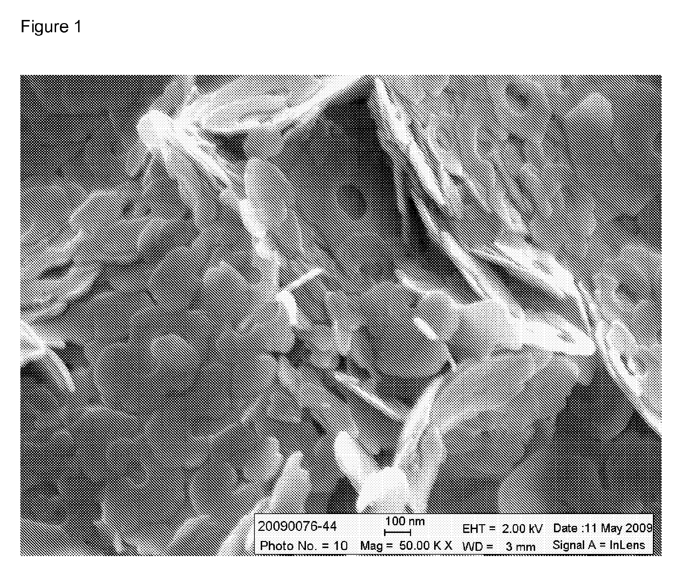

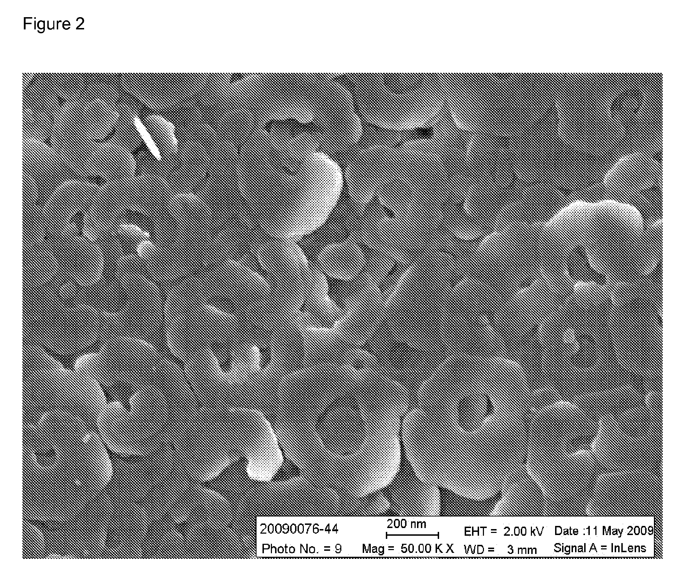

Figures 1 and 2 are SEM micrographs of an LDH according to the present invention.

EXAMPLES

Example 1

800 grams of magnesium oxide (Zolitho R 40, ex Martin Marietta Magnesia 15 Specialties LLC; 98% purity) and 694.7 grams of aluminium trihydroxide (Alumill F505) were mixed in 8,364 grams of demineralized water and ground in a pearl mill to an average particle size (d50) of 2.84 $\mu$m. 5,470 grams of this milled slurry were fed to an oil-heated autoclave equipped with three Intermig stirrers and a bottom scraper. The reactor was closed and heated to 90°C within 60 minutes and was maintained at this temperature for 4 hours, using a stirring speed of 500 rpm. Subsequently, the autoclave was cooled to below 70°C within 1 hour and the resulting slurry was removed from the reactor.

To characterize the morphology of the materials, scanning electron micrograph (SEM) pictures were taken, and at a magnification representing a total area of 2x2.5$\mu$m, the area A and the perimeter P of 10 representative platelets were determined. With these data, the value of $P/2\pi\sqrt{(A/\pi)}$ was calculated for each of these platelets. The mean value of $P/2\pi\sqrt{(A/\pi)}$ was 1.36.

The amounts of gibbsite, brucite, and periclase were determined with XRD, via weighed subtraction of diffractograms of these materials.

The mean stack thickness (Lc) was determined via XRD, using the 003-reflection, employing the well-known Scherrer technique as disclosed in "The Scherrer Formula for X-Ray Particle Size Determination,". Phys. Rev. (American Physical Society) 56 (10) 978-982, November 1939, yielding a value of 25.4 nm.

Example 2

256.13 grams of the layered double hydroxide slurry prepared in Example 1, which contained hydroxyl anions in the interlayer, were added to a beaker glass. The slurry was diluted with 465 grams of distilled water while stirring. To this slurry 11.11 grams of $(NH_4)_2.CO_3$ were added while stirring, in order to obtain an $Al:CO_3$ stoichiometric ratio of 2:1. The reaction mixture was stirred at 70°C during 45 min. During this period the release of $NH_3$ was clearly detected. SEM-analysis showed that the morphology was essentially the same, yielding a mean value of $P/2\pi\sqrt{(A/\pi)}$ of 1.33.

IR-analysis showed that the hydroxyl anions in the interlayer were fully exchanged for carbonate ions.

(Comparative) Examples 3-20

To explore the optimal conditions for synthesizing layered double hydroxides showing a high value of $P/2\pi\sqrt{(A/\pi)}$, the synthetic procedure described in Example 1 was repeated, with different Mg/Al-ratios, process temperatures, and particle sizes of the feedstock. Samples were taken during the thermal treatment.

The various synthesis parameters, as well as the results, are summarized in the table below.

| Example | Mg/Al | d50 ($\mu$m) | $(Mg/Al)^3*d50$ ($\mu$m) | T(°C) | t(hr) | LDH% | Lc (nm) | $P/(2\pi\sqrt{A/\pi})$ |
|---|---|---|---|---|---|---|---|---|
| 3 (Comp.) | 2.01 | 1.92 | 15.59 | 90 | 0.5 | 88.1 | 16.3 | 1.09 |
|  |  |  |  |  | 2 | 91.2 | 15.7 | 1.13 |
|  |  |  |  |  | 5 | 91.6 | 16.9 | 1.12 |
|  |  |  |  |  | 24 | 97.6 | 17.6 | 1.18 |
| 4 (Comp.) | 2.01 | 1.92 | 15.59 | 104.3 | 0.5 | 88.7 | 17.9 | 1.08 |
|  |  |  |  |  | 2 | 91.5 | 19.5 | 1.11 |
|  |  |  |  |  | 5 | 92 | 20.9 | 1.12 |
|  |  |  |  |  | 24 | 95.5 | 22.5 | 1.14 |
| 5 (Comp.) | 2.01 | 1.92 | 15.59 | 121 | 0.5 | 92.3 | 20.9 | 1.07 |
|  |  |  |  |  | 2 | 92 | 21.4 | 1.09 |
|  |  |  |  |  | 5 | 95.8 | 22 | 1.11 |
|  |  |  |  |  | 24 | 98 | 35.5 | 1.06 |
| 6 | 2.01 | 2.64 | 21.44 | 90 | 0.5 | 83.3 | 22.5 | 1.25 |
|  |  |  |  |  | 2.5 | 87.9 | 28.4 | 1.31 |
|  |  |  |  |  | 5.5 | 86.9 | 27.5 | 1.33 |
| 7 | 2.01 | 2.64 | 21.44 | 104.5 | 0.5 | 77.5 | 21.4 | 1.21 |
|  |  |  |  |  | 2 | 86.1 | 23.8 | 1.26 |
|  |  |  |  |  | 5.5 | 91.3 | 23.8 | 1.29 |
| 8 | 2.01 | 2.64 | 21.44 | 120 | 0.5 | 93 | 22.5 | 1.13 |
|  |  |  |  |  | 2.5 | 85 | 24.4 | 1.18 |
| 9 | 2.01 | 3.51 | 28.50 | 90 | 0.5 | 72.7 | 16.6 | 1.28 |
|  |  |  |  |  | 2 | 77.9 | 23.8 | 1.34 |
|  |  |  |  |  | 5 | 79.2 | 22.5 | 1.37 |
| 10 | 2.01 | 3.51 | 28.50 | 105 | 0.5 | 72 | 21.4 | 1.19 |
|  |  |  |  |  | 2 | 76.7 | 23.8 | 1.22 |
|  |  |  |  |  | 5 | 75.5 | 23.8 | 1.27 |

(continued)

| Example | Mg/Al | d50 (μm) | $(Mg/Al)^3*d50$ (μm) | T(°C) | t(hr) | LDH% | Lc (nm) | $P/(2\pi\sqrt{A/\pi})$ |
|---|---|---|---|---|---|---|---|---|
| 11 | 2.01 | 3.51 | 28.50 | 119.7 | 0.5 | 73.8 | 20 | 1.15 |
| | | | | | 2 | 79 | 23.1 | 1.19 |
| | | | | | 5 | 82.7 | 22.5 | 1.22 |
| 12 | 2.25 | 2.12 | 24.15 | 90 | 0.5 | 84.3 | 20.9 | 1.25 |
| | | | | | 2 | 84 | 22.5 | 1.32 |
| | | | | | 5 | 88 | 23.1 | 1.36 |
| | | | | | 24 | 92.5 | 23.8 | 1.29 |
| 13 | 2.25 | 2.12 | 24.15 | 105 | 0.5 | 84.6 | 22.5 | 1.21 |
| | | | | | 2 | 85.9 | 23.1 | 1.24 |
| | | | | | 5 | 86.5 | 22.5 | 1.28 |
| 14 | 2.25 | 2.12 | 24.15 | 120 | 0.5 | 84.5 | 20.9 | 1.18 |
| | | | | | 2 | 87.5 | 20.9 | 1.21 |
| | | | | | 5 | 89.8 | 23.8 | 1.25 |
| 15 | 2.19 | 2.64 | 27.73 | 90 | 0.5 | 72.5 | 21.4 | 1.19 |
| | | | | | 1.5 | 83.7 | 25.1 | 1.24 |
| | | | | | 4 | 90.5 | 28.4 | 1.26 |
| 16 | 2.19 | 2.64 | 27.73 | 105 | 0.25 | 80.7 | 22 | 1.17 |
| | | | | | 2.33 | 85.7 | 25.1 | 1.19 |
| | | | | | 5.75 | 82.5 | 24.4 | 1.22 |
| 17 | 2.19 | 2.64 | 27.73 | 120 | 0 | 77 | 20.4 | 1.12 |
| | | | | | 2 | 87.8 | 23.8 | 1.16 |
| | | | | | 5.5 | 88.5 | 24.4 | 1.18 |
| 18 (Comp.) | 2.25 | 3.22 | 36.68 | 90 | 0.5 | 62.5 | 16 | 1.08 |
| | | | | | 2 | 62.5 | 22.5 | 1.11 |
| | | | | | 5 | 56.5 | 19.1 | 1.12 |
| | | | | | 24 | 79.2 | 17.2 | 1.1 |
| 19 (Comp.) | 2.25 | 3.22 | 36.68 | 105 | 0.5 | 54 | 20.4 | 1.09 |
| | | | | | 2 | 66 | 19.1 | 1.09 |
| | | | | | 5 | 66.5 | 22 | 1.11 |
| | | | | | 24 | 79 | 16.9 | 1.09 |
| 20 (Comp.) | 2.25 | 3.22 | 36.68 | 120 | 0.5 | 57 | 21.4 | 1.07 |
| | | | | | 2 | 55.4 | 19.1 | 1.09 |
| | | | | | 5 | 61 | 17.6 | 1.1 |
| | | | | | 24 | 90 | 20 | 1.07 |

Figures 1 and 2 illustrate the morphology of the LDH formed in Example 12, after 24 hours of thermal treatment. It clearly shows the ring-shaped and sickle-shaped structures.

**Claims**

1. Layered double hydroxide comprising platelets having an area A and a perimeter P, the value of $P/(2\pi\sqrt{(A/\pi)})$ being more than 1.15.

**2.** Layered double hydroxide according to claim 1 wherein the value of $P/(2\pi\sqrt{A/\pi})$ is more than 1.25.

**3.** Layered double hydroxide according to claim 2 wherein the value of $P/(2\pi\sqrt{(A/\pi)})$ is more than 1.35.

**4.** Layered double hydroxide according to any one of the preceding claims wherein the mean stack thickness is in the range 10-40 nm.

**5.** Layered double hydroxide according to claim 4 wherein the mean stack thickness is in the range 15-35 nm, preferably 20-30 nm.

**6.** Layered double hydroxide according to any one of the preceding claims containing at least one trivalent metal and at least one divalent metal, the trivalent metal being aluminium, the divalent metal being selected from magnesium, zinc, and mixtures thereof.

**7.** Process for the preparation of a layered double hydroxide according to any one of the preceding claims comprising the steps of:

- preparing a slurry comprising at least one oxide, hydroxide, or oxyhydroxide of a trivalent metal M(III) and at least one oxide, hydroxide, or oxyhydroxide of a divalent metal M(II) in a molar ratio M(II)/M(III) of 1.5 to 3, an average particle size (d50) in the range 1-4 microns, and where the value of $[M(II)/M(III)]^3*d50$ is in the range 16-36 $\mu$m,
- thermally treating said slurry at a temperature in the range 75-120°C for a period of 1-24 hours.

**8.** Process according to claim 7 wherein the average particle size (d50) is 1.5-3.5, preferably 2.0-3.0 microns.

**9.** Process according to claim 7 or 8 wherein the temperature is in the range 80-110°C, preferably 85-105°C.

**10.** Process according to any one of claims 7 to 9 wherein the molar ratio M(II)/M(III) is 1.8-2.6, preferably 2-2.4.

**11.** Process according to any one of claims 7 to 10 wherein the thermal treatment is performed for a period of 2-16, preferably 3-8 hours.

**12.** Use of the layered double hydroxide of any one of claims 1-6 as PVC stabilizer, as solid base catalyst, in coatings, or as fluid catalytic cracking additive.

Figure 1

20090076-44   100 nm   EHT = 2.00 kV   Date :11 May 2009
Photo No. = 10   Mag = 50.00 K X   WD = 3 mm   Signal A = InLens

Figure 2

Europäisches
Patentamt

European
Patent Office

Office européen
des brevets

## EUROPEAN SEARCH REPORT

Application Number

EP 09 16 1849

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OKAMOTO ET AL: "Factors affecting the crystal size of the MgAl-LDH (layered double hydroxide) prepared by using ammonia-releasing reagents" APPLIED CLAY SCIENCE, ELSEVIER SCIENCE, NL, vol. 37, no. 1-2, 1 June 2007 (2007-06-01), pages 23-31, XP022100935 ISSN: 0169-1317 * the whole document * ----- | 1-6 | INV. C01F7/00 |
| A | US 2002/110520 A1 (STAMIRES DENNIS [US] ET AL) 15 August 2002 (2002-08-15) * the whole document * ----- | 7-12 | |
| E | WO 2009/080597 A (AKZO NOBEL NV [NL]; WINTERS ROBIN [NL]; SCHOMAKER ELWIN [NL]; O BOEN [) 2 July 2009 (2009-07-02) * examples * ----- | 7-12 | |
| | | | TECHNICAL FIELDS SEARCHED (IPC) |
| | | | C01F |

The present search report has been drawn up for all claims

| Place of search | Date of completion of the search | Examiner |
|---|---|---|
| Munich | 30 November 2009 | Stratford, Katja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 1849

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2009

| Patent document cited in search report | Publication date | Patent family member(s) | Publication date |
|---|---|---|---|
| US 2002110520 A1 | 15-08-2002 | NONE | |
| WO 2009080597 A | 02-07-2009 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9941198 A
- WO 9941196 A
- WO 9941195 A
- WO 9941197 A
- WO 01012550 A
- WO 01012543 A
- WO 02064504 A

### Non-patent literature cited in the description

- Hydrotalcite-type anionic clays: Preparation, Properties and Applications. **F. Cavani et al.** Catalysis Today. Elsevier Science Publishers, 1991, vol. 11
- Anionic clays: trends in pillary chemistry. **J P Besse.** Synthesis and Microporous Solids. Van Nostrand Reinhold, 1992, vol. 2, 108
- The Scherrer Formula for X-Ray Particle Size Determination. Phys. Rev. American Physical Society, November 1939, vol. 56, 978-982